# EUROPÄISCHE PATENTANMELDUNG

(11) **EP 2 233 313 A1**
(43) Veröffentlichungstag der Anmeldung: **29.09.2010**
(21) Anmeldenummer: 09405049.9
(22) Anmeldetag: 13.03.2009
(51) Int. Cl.: B42C 19/00, B42C 19/08, B65H 39/02, B65G 47/84

(54) **Verfahren und Vorrichtungen zur Herstellung von aus mehreren Druckprodukten gebildeten, klebegebundenen Druckerzeugnissen**

(71) Anmelder: Müller Martini Holding AG, 6052 Hergiswil (CH)
(72) Erfinder: Boos, Konrad, 9507 Stettfurt (CH)

(57) **Zusammenfassung**

Bei einem Verfahren zur Herstellung von aus mehreren Druckprodukten (2) gebildeten, klebegebundenen Druckerzeugnissen werden die Druckprodukte (2) auf einem Sammelabschnitt (5) einer umlaufenden, aus gleichmässig beabstandeten Fördereinheiten (6) gebildeten ersten Fördervorrichtung (3) durch entlang des Sammelabschnittes (5) hintereinander positionierte Druckbogenanleger (8) auf Tragflächen (9) der Fördereinheiten (6) zu losen Buchblocks (12) liegend zusammengetragen und anschliessend einer taktsynchron mit der ersten Fördervorrichtung (3) umlaufenden, einer Klebebindevorrichtung zugeordneten zweiten Fördervorrichtung (4) zugeführt, wobei die losen Buchblocks (12) auf einem dem Sammelabschnitt (5) folgenden Förderabschnitt (11) der ersten Fördervorrichtung (3) quer zur Förderrichtung (F) von den Fördereinheiten (6) der ersten Fördervorrichtung (3) auf Fördereinheiten (7) der gleichsinnig verlaufenden zweiten Fördervorrichtung (4) verschoben werden.

## Beschreibung

Die Erfindung betrifft ein Verfahren und eine Vorrichtung zur Herstellung von aus mehreren Druckprodukten gebildeten, klebegebundenen Druckerzeugnissen, bei dem die Druckprodukte auf einem Sammelabschnitt einer umlaufenden, aus gleichmässig beabstandeten Fördereinheiten gebildeten ersten Fördervorrichtung durch entlang des Sammelabschnittes hintereinander positionierte Druckbogenanleger auf Tragflächen der Fördereinheiten zu losen Buchblocks liegend zusammengetragen und anschliessend einer taktsynchron mit der ersten Fördervorrichtung umlaufenden, einer Klebebindevorrichtung zugeordneten zweiten Fördervorrichtung zugeführt werden.

Die industrielle Herstellung von Broschüren, Katalogen, Telefonbüchern, Taschenbüchern oder dgl. Druckprodukten wird mehrheitlich nach dem Verfahren der Klebebindung durchgeführt. Dazu werden zuerst die einzelnen Druckbogen in einer Zusammentragmaschine in der richtigen Reihenfolge gesammelt, anschliessend in einen Klebebinder überführt und durch diesen gebunden. Zusammentragmaschinen nach dem Stand der Technik weisen eine in einer Führungsbahn umlaufend geführte Fördervorrichtung auf, die durch mehrere hintereinander angeordnete Fördereinheiten gebildet wird, mit denen Druckprodukte zu losen Buchblocks in einem Sammelabschnitt zusammengetragen werden. Auf den Fördereinheiten sind die Rückenkanten der Druckprodukte in Förderrichtung an der Vorderkante und quer zur Förderrichtung ausgerichtet. Eine Fördereinheit besteht beispielsweise im Wesentlichen aus einem geneigten Tisch und einem zum Tisch senkrecht stehenden Anschlag zur Aufnahme der Druckprodukte. Entlang der Führungsbahn angeordnete Bogenanleger beschicken die Fördereinheiten mit Druckprodukten, sodass am Ende des Sammelabschnitts die Fördereinheiten vollständige, lose Buchblocks enthalten, die jeweils nach Anschlägen an den Fördereinheiten ausgerichtet sind. Die mit den Buchblocks zu beschickenden, in einer Bahn umlaufenden Transportklammern der nachgeschalteten Klebebindevorrichtung weisen einen grösseren Teilungsabstand auf als die Fördereinheiten der Fördervorrichtung auf dem Sammelabschnitt. Deshalb werden die Buchblocks auf einem Förderabschnitt zwischen Sammelabschnitt und Klebebindevorrichtung zur Bildung eines grösseren Teilungsabstandes beschleunigt und hochgestellt, so dass sie sich in einer zur Förderrichtung etwa parallel ausgerichteten Lage befinden und aus dieser durch Anheben in die Transportklammern der Klebebindevorrichtung überführt werden können.
In der EP 1 886 832 A1 wird vorgeschlagen, dass die quer zur Förderrichtung der Fördereinheiten und in geneigter Rücklage gegen die Förderrichtung zusammengetragenen Druckprodukte resp. losen Buchblocks zur Bildung eines grösseren Teilungsabstandes zwischen den Fördereinheiten auf dem weiteren Förderabschnitt beschleunigt und durch eine Schwenkbewegung hochgestellt werden, derart, dass sich jeweils die Seitenkanten der Buchblocks in einer zur Förderrichtung etwa parallelen Lage befinden, aus der die losen Buchblocks in die Transportklammern der Klebebindevorrichtung angehoben werden können. Zumindest auf dem weiteren Förderabschnitt werden die Buchblocks an den flächigen Seiten durch eine einwirkende Kraft an den Fördereinheiten festgehalten, damit sie während der Beschleunigung und dem Hochstellen in den Fördereinheiten ihre Lage beibehalten. Zusätzlich sind an den Fördereinheiten Hebevorrichtungen vorgesehen, um die Buchblocks in die Transportklammern der Klebebindevorrichtung anheben zu können.

In der EP 1 886 833 A1 wird vorgeschlagen, die auf einem ersten Förderabschnitt quer zur Förderrichtung in einer gegen die Förderrichtung geneigten Rücklage zusammengetragenen losen Buchblocks auf einem weiteren Förderabschnitt zur Bildung eines grösseren Teilungsabstandes zu beschleunigen und durch eine Schwenkbewegung derart hochzustellen, dass sich eine Seitenkante in einer zur Förderrichtung etwa parallelen Lage befindet, um aus dieser Lage Transportklammern einer Klebebindevorrichtung von unten beschicken zu können.

Wie dargelegt, muss bei diesen bekannten Einrichtungen jede der Fördereinheiten eine grosse Anzahl an Operationen ausführen. Nachteilig ist deshalb die sich aus der hohen Funktionalität ergebende Komplexität der Fördereinheiten mit einem entsprechend hohen Bauteileaufwand. Ebenso fällt ins Gewicht, dass die Menge der Fördereinheiten mit der Anzahl Bogenanleger resp. mit der Anzahl der zu sammelnden Druckprodukte proportional zunimmt, wobei noch zu berücksichtigen ist, dass sich zusätzlich annähernd gleich viele leere Fördereinheiten im Rücklauf befinden.
Es ist Aufgabe der vorliegenden Erfindung, eine Vorrichtung zu schaffen, die bei weniger Komplexität die geforderte Funktionalität erreicht. Weiterhin soll die Ausschleusung fehlerhafter Produkte nach dem Sammelbereich möglich sein.

Erfindungsgemäss wird diese Aufgabe dadurch gelöst, dass die losen Buchblocks auf einem dem Sammelabschnitt folgenden Förderabschnitt (auch Verschiebeabschnitt bezeichnet) der ersten Fördervorrichtung quer zur Förderrichtung von den Fördereinheiten der ersten Fördervorrichtung auf Fördereinheiten der gleichsinnig verlaufenden zweiten Fördervorrichtung verschoben werden.

Anschliessend wird die vorgeschlagene Einrichtung unter Bezugnahme auf die Zeichnung und den zitierten Stand der Technik, auf die bezüglich aller in der Beschreibung nicht erwähnten Einzelheiten verwiesen wird, anhand von Ausführungsbeispielen erläutert. In der Zeichnung zeigen:
- Fig. 1: eine perspektivische Darstellung einer erfindungsgemässen Einrichtung,
- Fig. 2: eine auszugsweise vergrösserte Darstellung des Förder- resp. Verschiebeabschnitts in Fig. 1,
- Fig. 3: einen Querschnitt der in Fig. 1 veranschaulichten Einrichtung im Förder- resp. Verschiebeabschnitt,
- Fig. 4: einen Querschnitt der in Fig. 1 gezeigten Einrichtung im Förder- resp. Verschiebungsabschnitt in alternativer Ausführung und
- Fig. 5: eine perspektivische Darstellung einer erfindungsgemässen Einrichtung mit einer Ausschleusvorrichtung.

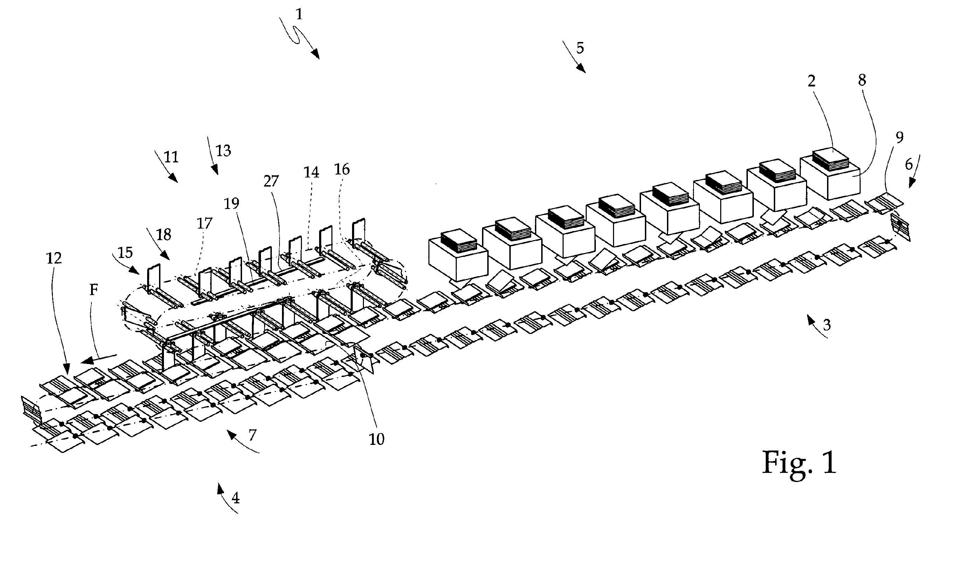

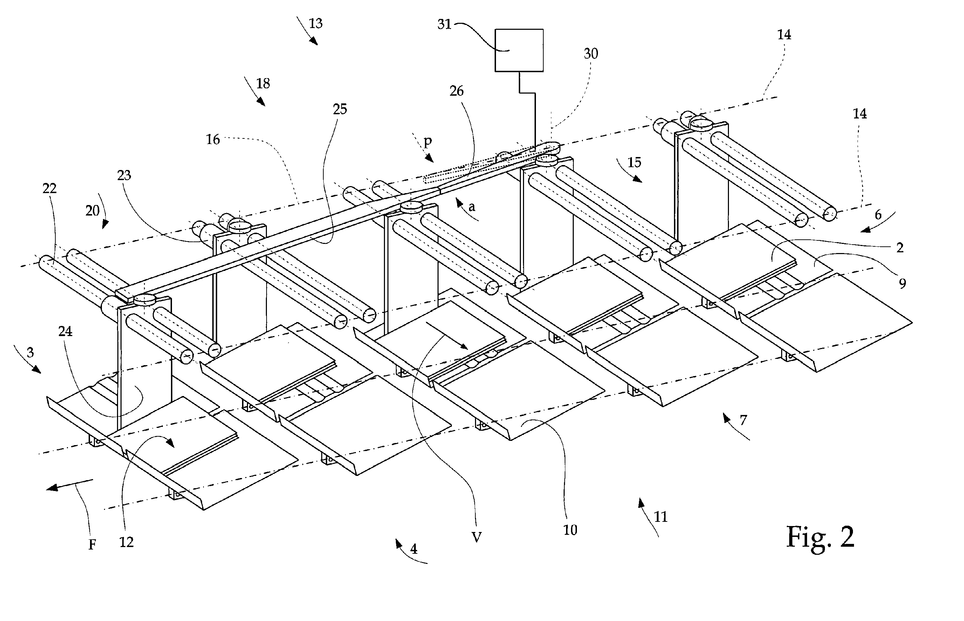

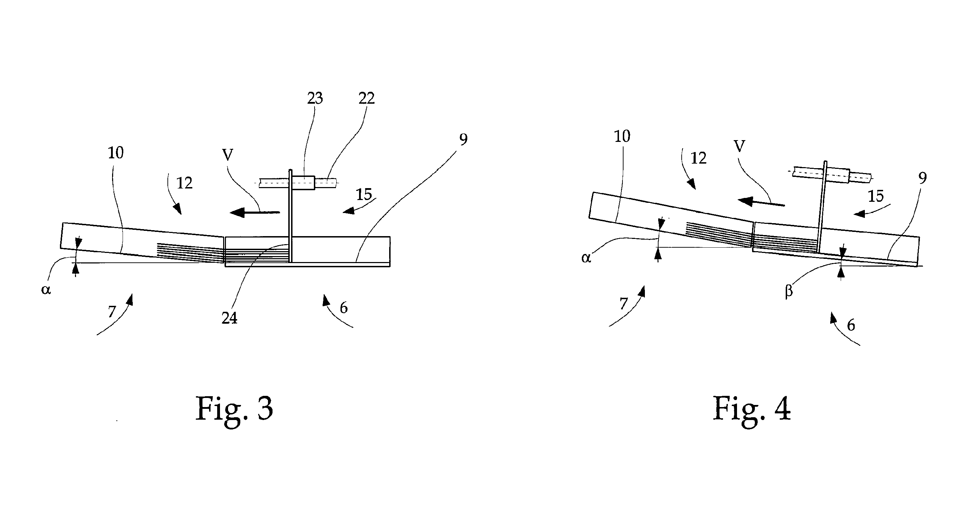

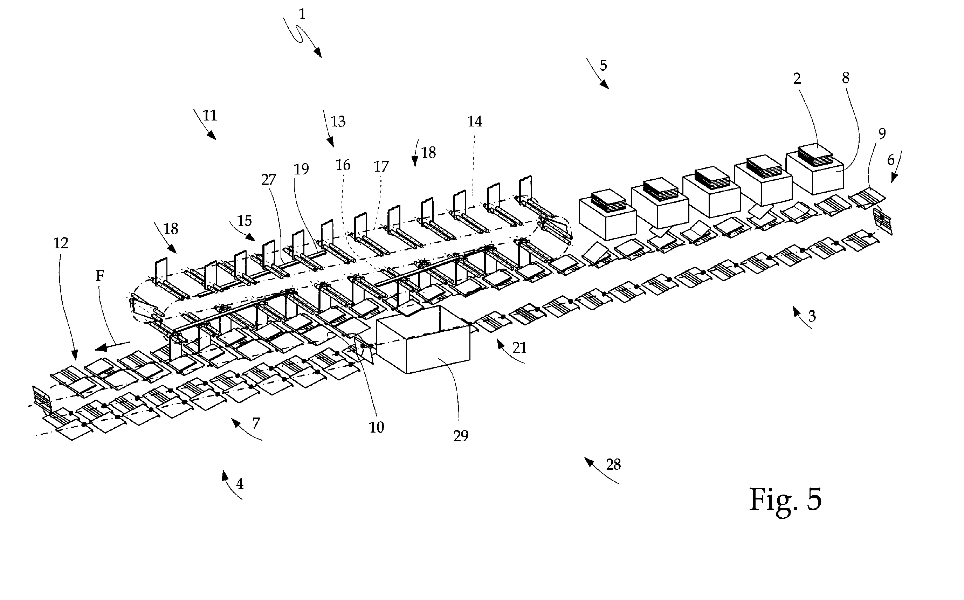

Die Fig. 1 zeigt eine Einrichtung 1 zur Herstellung von aus mehreren Druckprodukten 2 gebildeten, einen klebegebundenen Rücken aufweisenden Druckerzeugnissen, mit einem Sammelabschnitt 5, auf dem Druckprodukte 2 zu losen Buchblocks 12 nach bekannter Art zusammengetragen werden, und einen daran anschliessenden Förderabschnitt 11 auf dem die Buchblocks 12 von einer ersten 3 auf eine zweite Fördervorrichtung 4 verschoben werden. Die aus mehreren Druckprodukten 2 gebildeten, klebegebundenen Druckerzeugnisse werden auf dem Sammelabschnitt 5 einer umlaufenden, aus gleichmässig beabstandeten Fördereinheiten 6 gebildeten ersten Fördervorrichtung 3 durch entlang des Sammelabschnittes 5 hintereinander positionierten Druckbogenanlegern 8 auf Tragflächen 9 der Fördereinheiten 6 zu losen Buchblocks 12 liegend zusammengetragen und anschliessend der taktsynchron neben der ersten Fördervorrichtung 3 umlaufenden, einer Klebebindevorrichtung zugeordneten und in Förderrichtung F gleichmässig beabstandete Fördereinheiten 7 aufweisenden, zweiten Fördervorrichtung 4 zugeführt. Die erste Fördervorrichtung 3 und zweite Fördervorrichtung 4 sind so zueinander angeordnet, dass sie den dem Sammelabschnitt 5 der ersten Fördervorrichtung 3 folgenden gemeinsamen Förderabschnitt, auch Verschiebeabschnitt 11 bezeichnet, bilden, auf dem, wie in Fig. 2 gezeigt, die losen Buchblocks 12 mittels einer quer zur Förderrichtung F wirkenden, taktsynchron mit den Fördereinheiten 6, 7 in Richtung V bewegten Verschiebevorrichtung 13 von den Fördereinheiten 6 der ersten Fördervorrichtung 3 auf die Fördereinheiten 7 der gleichsinnig verlaufenden zweiten Fördervorrichtung 4 verschoben werden. Die Verschiebevorrichtung 13 weist einseitig der Fördereinheiten 6 angeordnete, quer zur Förderrichtung F bewegliche Schiebeelemente 15 auf, die in gleichmässigen Abständen mit wenigstens einer an einem umlaufenden Zugmittel 14 befestigten Führungsanordnungen 20 verbunden sind. Die Führungsanordnung 20 bilden am Zugmittel 14 befestigte Führungsstangen 22, auf denen mit den Schiebeelementen 15 verbundene Schiebemuffen 23 verschiebbar angeordnet sind. Zudem ist der Verschiebevorrichtung 13 entlang des Verschiebeabschnittes 11 an einem der ersten Fördervorrichtung 4 zugewandten Arbeitstrum 16 der Verschiebevorrichtung 13 eine auf die Schiebelemente 15 einwirkende Steuervorrichtung 18 zugeordnet. Die Fördereinheiten 6 der ersten Fördervorrichtung 3 und die Fördereinheiten 7 der zweiten Fördervorrichtung 4 verlaufen auf dem zur Verschiebung der Buchblocks 12 bestimmten Förderabschnitt 11 resp. dem Verschiebeabschnitt parallel und taktsynchron nebeneinander. Die dem Arbeitstrum 16 zugeordnete Steuervorrichtung 18 weist eine über dem Verschiebeabschnitt in Förderrichtung F schräg von der ersten Fördervorrichtung 3 zur zweiten Fördervorrichtung 4 verlaufende Steuerbahn 25 auf, die ein als Weiche 26 ausgebildetes vorderes Ende aufweist (siehe Fig. 2). Mit der dargestellten Steuerung 31 verbundene Weiche 26, deren Weichenzunge um eine Achse 30 zwischen zwei Endlagen schwenkbar gelagert ist, können die Buchblocks 12 oder Teile davon, von den Fördereinheiten 6 der ersten Fördervorrichtung 3, beispielsweise selektiv ausgewählt, auf Fördereinheiten 7 der zweiten Fördervorrichtung 4 verschoben werden. Eine aktive Steuerposition a der Weiche 26, in der die Schiebeelemente 15 abgelenkt werden, ist in der Fig. 2 mit ausgezogenen Linien, eine inaktive Steuerposition p durch unterbrochene Linien dargestellt. Einem oberhalb des Arbeitstrums 16 verlaufenden unteren Leertrum 17 der Verschiebevorrichtung 13 ist eine die Schiebeelemente 15 in die Ausgangsstellung zurück versetzende weitere Steuervorrichtung 19 zugeordnet, die eine entgegen der Verschieberichtung V wirkende, über die erste Fördervorrichtung 3 schräg verlaufende Steuerbahn 27 aufweist (siehe Fig. 1). Im Bereich des Arbeitstrums 16 sind die in Verschieberichtung V mit einer auf die Buchblocks 12 einwirkenden Fläche 24 ausgebildeten Schiebeelemente 15, an den Zugmitteln 14 sich nach unten erstreckend, befestigt. In Verschieberichtung V verlaufen die Tragflächen 9 der ersten Fördereinheiten und die Tragflächen 10 der zweiten Fördereinheiten im Wesentlichen horizontal. In einer weiteren, bevorzugten Ausführungsform nach der Fig. 3 verlaufen die Tragflächen 10 der Fördereinheiten 7 der zweiten Fördervorrichtung 4 in Verschieberichtung V ansatzlos ansteigend. Es kann weiter vorteilhaft sein, die Tragflächen 9 der ersten Fördereinheit 9 in Verschieberichtung V ansteigend zu gestalten. In diesem Fall sind Anschläge oder Haltemittel vorzusehen, die die Buchblocks 12 oder Teile davon vor Erreichen des Verschiebeabschnittes 11 auf den Tragflächen 9 der Fördereinheiten 6 der ersten Fördervorrichtung 3 festhalten. In jedem Fall weisen die Tragflächen 9 der Fördereinheiten 6 der ersten Fördervorrichtung 3 höchstens die gleiche Neigung auf wie die Tragflächen 10 der Fördereinheiten 7 der zweiten Fördervorrichtung 4. D. h., wie Fig. 4 zeigt, dass der Steigungswinkel□stets grösser oder gleich dem Steigungswinkel □ist. Um ein Abrutschen der Druckprodukte 2 auf den Tragflächen 10 der Fördereinheiten 7 der zweiten Fördervorrichtung 4 zu vermeiden, sind an den Tragflächen 10 der Fördereinheiten 7 nicht dargestellte Haltemittel vorgesehen, um die Buchblocks 12 nach Erreichen der Fördereinheiten 7 festzuhalten. In einer weiteren vorteilhaften Ausführungsform ist, wie in Fig. 5 dargestellt, zwischen dem Sammelabschnitt 5 und dem Verschiebeabschnitt 11 ein Ausschleusabschnitt 28 für das selektive Ausschleusen, beispielsweise fehlerhafter Buchblocks 12 vorgesehen. Die Arbeitsweise ist gleichartig zu derjenigen zum Verschieben der Buchblocks 12 von den Tragflächen 9 der ersten Fördereinheiten 6 auf die Tragflächen 10 der zweiten Fördereinheiten 7. Anstelle einer zweiten Fördervorrichtung 4 ist im Ausschleusabschnitt 28 ein Aufnahmeelement 29 vorgesehen, beispielsweise ein Auffangbehälter oder ein einfaches Transportband, für ausgeschleuste Buchblocks 12. Anstelle einer zweiten Verschiebevorrichtung 13 könnte das Zugmittel 14 derart verlängert werden, dass es sich sowohl über den Verschiebeabschnitt 11 als auch den Ausschleusabschnitt 28 erstreckt. In diesem Fall ist eine zusätzliche Steuervorrichtung 21 vorzusehen, die etwa gleich wie die Steuervorrichtung 18 sein kann.

## Patentansprüche

1. Verfahren zur Herstellung von aus mehreren Druckprodukten (2) gebildeten, klebegebundenen Druckerzeugnissen, bei dem die Druckprodukte (2) auf einem Sammelabschnitt (5) einer umlaufenden, aus gleichmässig beabstandeten Fördereinheiten (6) gebildeten ersten Fördervorrichtung (3) durch entlang des Sammelabschnittes (5) hintereinander positionierte Druckbogenanleger (8) auf Tragflächen (9) der Fördereinheiten (6) zu losen Buchblocks (12) liegend zusammengetragen und anschliessend einer taktsynchron mit der ersten Fördervorrichtung (3) umlaufenden, einer Klebebindevorrichtung zugeordneten zweiten Fördervorrichtung (4) zugeführt werden, **dadurch gekennzeichnet, dass** die losen Buchblocks (12) auf einem dem Sammelabschnitt (5) folgenden Förderabschnitt (11) der ersten Fördervorrichtung (3) quer zur Förderrichtung (F) von den Fördereinheiten (6) der ersten Fördervorrichtung (3) auf Fördereinheiten (7) der gleichsinnig verlaufenden zweiten Fördervorrichtung (4) verschoben werden.

2. Verfahren nach Anspruch 1, **dadurch gekennzeichnet, dass** auf dem zur Verschiebung der Buchblocks (12) bestimmten Förderabschnitt (11) die erste und die zweite Fördervorrichtung (3,4) parallel zueinander verlaufen.

3. Verfahren nach Anspruch 1 oder 2, **dadurch gekennzeichnet, dass** die Verschiebung der Buchblocks (12) auf eine Tragfläche (10) der Fördereinheit (7) der zweiten Fördervorrichtung (4) ansatzlos ansteigend erfolgt.

4. Verfahren nach einem der Ansprüche 1 bis 3, **dadurch gekennzeichnet, dass** die Verschiebung auf der Tragfläche (9) einer Fördereinheit (6) der ersten Fördervorrichtung (3) höchstens mit gleicher Neigung wie auf der Tragfläche (10) einer Fördereinheit (7) der zweiten Fördervorrichtung (4) erfolgt.

5. Verfahren nach einem der Ansprüche 1 bis 4, **dadurch gekennzeichnet, dass** die Buchblocks (12) oder Teile davon vor Erreichen des Förderabschnittes (11) auf den Tragflächen (9) der Fördereinheiten (6) der ersten Fördervorrichtung (3) kraft- oder formschlüssig festgehalten werden.

6. Verfahren nach einem der Ansprüche 1 bis 5, **dadurch gekennzeichnet, dass** die Buchblocks (12) nach Erreichen der Tragflächen (10) der Fördereinheiten (7) der zweiten Fördervorrichtung (4) kraft- oder formschlüssig festgehalten werden.

7. Verfahren nach einem der Ansprüche 1 bis 6, **dadurch gekennzeichnet, dass** in Förderrichtung (F) betrachtet dem Förderabschnitt (11) ein Ausschleusabschnitt (28) für fehlerhafte Buchblocks (12) vorgeschaltet ist.

8. Verfahren nach einem der Ansprüche 1 bis 7, **dadurch gekennzeichnet, dass** die Buchblocks (12) oder Teile davon von den Fördereinheiten (6) der ersten Fördervorrichtung (3) selektiv ausgewählt auf Fördereinheiten (7) der zweiten Fördervorrichtung (4) verschoben werden.

9. Einrichtung zur Herstellung von aus mehreren Druckprodukten (2) gebildeten, einen klebegebundenen Rücken aufweisenden Druckerzeugnissen, mit einer umlaufenden, aus in Förderrichtung (F) gleichmässig beabstandeten Fördereinheiten (6) gebildeten ersten Fördervorrichtung (3) zum Transport von zu losen Buchblocks (12) liegend zusammengetragenen Druckprodukten (2) und einer taktsynchron mit der ersten Fördervorrichtung (3) umlaufenden, einer Klebebindevorrichtung zugeordneten, aus in Förderrichtung (F) gleichmässig beabstandeten Fördereinheiten (7) gebildeten zweiten Fördervorrichtung (4), **dadurch gekennzeichnet, dass** die erste und zweite Fördervorrichtung (3,4) so zueinander angeordnet sind, dass sie einen gemeinsamen Förderabschnitt resp. Verschiebeabschnitt (11) bilden, auf dem die Buchblocks (12) mittels einer quer zur Förderrichtung (F) wirkenden, taktsynchron mitbewegten Verschiebevorrichtung (13) von den Fördereinheiten (6) der ersten Fördervorrichtung (3) auf Fördereinheiten (7) der zweiten Fördervorrichtung (4) verschiebbar sind.

10. Einrichtung nach Anspruch 9, **dadurch gekennzeichnet, dass** die Verschiebevorrichtung (13) an wenigstens einem umlaufenden Zugmittel (14), in gleichmässigen Abständen befestigte, quer zur Förderrichtung (F) verschiebbare Schiebeelemente (15) und an einem der ersten Fördervorrichtung (3) zugewandten, den Förder- (11) resp. Verschiebeabschnitt (11) bildenden Arbeitstrum (16) der Verschiebevorrichtung (13) eine auf die Schiebelemente (15) einwirkende verschiebewirksame Steuervorrichtung (18) aufweist.

11. Einrichtung nach Anspruch 9 oder 10, **dadurch gekennzeichnet, dass** einem oberhalb des Arbeitstrums (16) verlaufenden Leertrum (17) der Verschiebevorrichtung (13) eine die Schiebeelemente (15) in die Ausgangsstellung zurückversetzende weitere Steuervorrichtung (19) zugeordnet ist.

12. Einrichtung nach einem der Ansprüche 10 oder 11, **dadurch gekennzeichnet, dass** die Schiebeelemente (15) mit einer sich quer zur Förderrichtung (F) erstreckenden Führungsanordnung (20) verbunden sind.

13. Einrichtung nach Anspruch 12, **dadurch gekennzeichnet, dass** die Führungsanordnung (20) eine am Zugmittel (14) befestigte Führungsvorrichtung (22) aufweist, an der eine mit dem Schiebeelement (15) verbundene Schiebemuffe (23) verschiebbar gelagert ist.

14. Einrichtung nach einem der Ansprüche 10 bis 13, **dadurch gekennzeichnet, dass** die Schiebeelemente (15) im Bereich des Arbeitstrums (16) an den Zugmitteln (14) sich nach unten erstreckend befestigt sind.

15. Einrichtung nach Anspruch 14, **dadurch gekennzeichnet, dass** die Schiebeelemente (15) in Verschieberichtung (V) mit einer auf die Buchblocks (12) einwirkenden Fläche (24) ausgebildet sind.

16. Einrichtung nach einem der Ansprüche 10 bis 15, **dadurch gekennzeichnet, dass** die dem Arbeitstrum (16) zugeordnete Steuervorrichtung (18) eine oberhalb des Förder- (11) resp. Verschiebeabschnittes in Förderrichtung (F) schräg von der ersten Fördervorrichtung (3) zur zweiten Fördervorrichtung (4) verlaufende Steuerbahn (25) aufweist.

17. Einrichtung nach Anspruch 16, **dadurch gekennzeichnet, dass** die Steuerbahn (25) ein als Weiche (26) ausgebildetes vorderes Ende aufweist.

18. Einrichtung nach einem der Ansprüche 11 bis 17, **dadurch gekennzeichnet, dass** die dem Leertrum (17) der Verschiebevorrichtung (13) zugeordnete weitere Steuervorrichtung (19) eine entgegen der Verschieberichtung (V) über die erste Fördervorrichtung (3) schräg verlaufende Steuerbahn (27) aufweist.
